# EUROPEAN PATENT APPLICATION

(11) **EP 4 506 782 A1**
(43) Date of publication of application: **12.02.2025**
(21) Application number: 24191368.0
(22) Date of filing: 29.07.2024
(51) Int. Cl.: G06F 1/18

(54) **AN ELECTRONIC DEVICE**

(30) Priority: 07.08.2023 IT 202300016863
(71) Applicant: Cehic, Aldo, 37135 Verona (IT)
(72) Inventor: CEHIC, Aldo, 37135 Verona (IT)
(74) Representative: Trentin, Michele

(57) **Abstract**

An electronic device **(1)** comprising an electronic board **(2)** having a first length and a first width and on which an electronic circuit **(3)** is made. The first length and the first width have measurements whose ratio corresponds to the golden ratio.

## Description

### Field of application

The present invention is applicable to the field of electronic devices, whatever their use. However, the present invention finds particular advantageous application in the field of electronic computers and mobile communication devices.

### State of the art

It is known that the golden section or golden ratio or golden number or constant of Phidias or divine proportion, in the field of figurative arts and mathematics, refers to the irrational number 1.6180339887... obtained by calculating the ratio between two unequal lengths, of which the greater is the proportional mean between the lesser and the sum of the two.

The geometric and mathematical properties of the golden ratio and the frequent repetition in various natural and cultural contexts, apparently unrelated to each other, have for centuries aroused in the human mind the confirmation of the existence of a relationship between macrocosm and microcosm, between God and man, the universe and nature: a relationship between the whole and the part, between the largest and the smallest part that repeats itself endlessly through infinite subdivisions. Over time, numerous philosophers and artists have come to grasp an ideal of beauty and harmony, pushing themselves to seek it and, in some cases, to recreate it in the human environment as a canon of beauty; this is evidenced by the history of the name that in more recent times has taken on the names of golden and divine.

Some universally known examples are the face of the Mona Lisa by Leonardo da Vinci or the Vitruvian Man by the same author. And further, the famous Fibonacci sequence is linked to the golden ratio or, in nature, the snails that on average have a shell that reproduces a golden spiral. In nature, it has always been observed that the curvature of galaxies as well as that of sunflowers are related to the golden ratio. In other words, these observations indicate that at the magnetic level, and therefore also electrically, this ratio corresponds to conditions of electrical and magnetic equilibrium.

Another example of the importance of the golden ratio are the particular sound effects of musical instruments such as violins or pianos when made in accordance with the golden ratio.

In the wake of this, research by official bodies has been conducted to scientifically prove all of the above empirically. Research by the National Institutes of Health in Bethesda has moved in this direction. The article 'The Golden Ratio in Machine Learning' by Stefan Jaeger is an example of this. From the aforementioned research it emerges that the entropy of information is greatly improved when the golden ratio is used in the management of information transfer. In other words, the efficiency in the transfer and processing of information increases considerably as the encoding thereof and the conformation of the transmission channel take into account the golden ratio.

It is also known that in recent years, in the field of electronics and computing, much work has been done on what is known as 'artificial intelligence', that is, a discipline that studies whether and how intelligent computer systems can be created that are capable of simulating the capacity and behaviour of human thought.

Much has been done in this area, however, the limited processing speed capacity of electronic computers and the mechanics of making choices have always been hindrances. In fact, history has tried to make an electronic computer 'intelligent' simply by providing it with a database as complete as possible in order to analyse the situation and apply the best possible choice thereto based on previous knowledge. It is evident that the larger the database, the more correct the choice, but the longer it will take to determine that choice. Moreover, such a choice will necessarily be statistical and will never represent a 'human' choice since it would not take into account, except on a statistical level, the feelings and unpredictability of the human being.

In this sense, some researchers have tried to reconstruct neural networks that could reproduce the working mechanisms of the human brain, but even in this case the results obtained so far are far from the real artificial reproduction of a human being.

### Presentation of the invention

The object of the present invention is to at least partially overcome the problems of the prior art by improving the computational capacity of electronic devices so as to bring them closer to simulating a human being.

Within the scope of this general object, a particular object of the present invention is to provide an electronic device that is structurally optimized so as to improve the exchange of electrical signals between the electronic components that compose it.

Another object is to provide an electronic device whose functionality is improved, both in terms of computational functionality and signal transmissive/receptive functionality.

Said objects, as well as others which will become clearer below, are achieved by an electronic device according to the following claims, which are to be considered an integral part of the present patent.

In particular, the electronic device comprises at least one electronic board which, like all electronic boards, has a first predefined length and a first predefined width. As always occurs, at least one electronic circuit suitable for carrying out at least part of the functionality that the electronic device must perform is made thereon.

According to an aspect of the invention, at least the first length and the first width of the board have measurements whose ratio corresponds to the golden ratio.

In other words, the ratio of the first length to the first width of the electronic board is at least close to 1.618.

As said, in fact, history has affirmed the concept that a harmonious human body has some parts of the body itself in a golden ratio with each other (the aforementioned Vitruvian Man is a striking example).

With the intention of improving the functional capacity of an electronic device and ensuring that it simulates as much as possible the operation of a human being, it is evident that an important aspect is to give the 'body' of the device, that is, at least the electronic boards that compose it, measurements that represent ideal dimensions for a human body.

In addition, as mentioned above, in nature it has been seen that this ratio affects elements such as galaxies, plants, animals, which are in magnetic and electrical balance. The improved sound of musical instruments made with the dimensions in a golden ratio to each other is a further example. In this sense, it is advantageous to ensure that in the design of the electronic device of the invention, the dimensions of the various components such as the electronic circuit board, allow to improve the electromagnetic balance of the device and thus its functionality.

Furthermore, all the traces developed in the electronic board have a length influenced by the size of the board itself. In particular, the entire 'routing' (technical term indicating the design of the electronic circuit in the electronic board) of the electronic circuit is influenced by the dimensions of the electronic board, and therefore by the ratio between first length and first width. Since the electronic circuit is, as is known, a channel where electrical signals flow, i.e. information (the bits are electrical signals that make up the electronic circuit), in accordance with what is stated in the aforementioned article 'The Golden Ratio in Machine Learning', it is evident that imposing the ratio between these two dimensions according to the golden ratio leads to an improvement in the transmission of signals and therefore an improvement in the functionality of the electronic circuit thus implemented.

As is known, typically an electronic circuit comprises one or more integrated circuits. In this case, according to another aspect of the invention, said integrated circuits have a second length and a second width whose ratio corresponds to the golden ratio.

Advantageously, similarly to what has been said about the electronic board, this feature allows the functional capacity of an electronic device to be improved and ensure that it simulates as much as possible the operation of a human being. In fact, the integrated circuits will also have a 'body' having measurements that represent ideal dimensions for a human body and for the electromagnetic balance of the electronic component.

Furthermore, since the two dimensions of the integrated circuits determine at least the lengths of the electrical connections between the microchip and the pins of the integrated circuit, once again, in accordance with the research cited above entitled 'The Golden Ratio in Machine Learning', the efficiency of the transmission of the signals of each individual integrated circuit is improved.

According to a further aspect of the invention, since the electronic circuit typically comprises a plurality of electronic components, for at least three of them the ratio between the distances between a first and a second and between the second and a third of these three electronic components corresponds to the golden ratio.

It is evident that this aspect once again satisfies the studies summarised in the aforementioned article 'The Golden Ratio in Machine Learning', thereby improving the entropy of the information exchanged between these electronic components.

Moreover, it has always been thought that the electrical connection between electronic circuits is similar to the nerve network of a human body. In this sense, ensuring that the electrical connections are in a golden ratio to each other optimises the arrangement of the components and thus the functioning of the electronic circuit by improving its electromagnetic balance.

### Brief description of the drawings

Further features and advantages of the invention will become more evident in light of the detailed description of a preferred but not exclusive embodiment of an electronic device according to the invention, illustrated by way of non-limiting example with the aid of the accompanying drawings, in which:

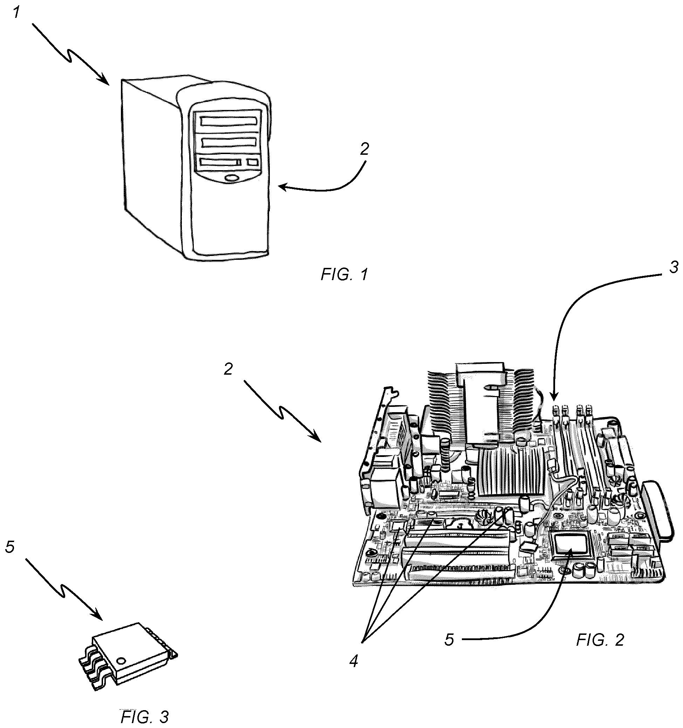

- FIG. 1 shows an electronic device according to the invention;
- FIGS. 2 and 3 show embodiment details of the device of FIG. 1.

### Detailed disclosure of an exemplary preferred embodiment

With reference to the above-mentioned figures, an electronic device **1** is disclosed. In the figures it is noted that this is a personal computer, but this should not be considered limiting for the invention which is applicable to electronic computers in general, electronic devices in general and finds, for example, valid application in the field of mobile communication devices such as smartphones or others.

In general, the electronic device **1** comprises an electronic board **2** which, like all electronic boards, has a first predefined length and a first predefined width. As always occurs, an electronic circuit **3** is made thereon which is suitable for carrying out at least some of the functions that the electronic device **1** must perform. In this case, since it is a personal computer, there is the motherboard on which are found: the microprocessor, the various controllers and buffers, the integrated circuits that manage the connections with the peripherals, and so on. Obviously this should not be considered limiting for different embodiments of the invention where, for example, in the case of different personal computers there are several boards dedicated to particular functions or where, as a further example, since the electronic device is different (for example a smartphone) the number of boards, their size, the number of electronic circuits and in general the number of electronic components that compose them can be any.

According to an aspect of the invention, at least the first length and the first width of the electronic board **2** have measurements whose ratio corresponds to the golden ratio. In other words, the ratio of the first length to the first width of the electronic board **2** is at least close to 1.618.

As mentioned above, all the traces formed in the electronic board **2** have a length influenced by the size of the board itself. In particular, all the 'routing' (technical term indicating the design of the electronic circuit in the electronic board) of the electronic circuit **3** is conditioned by the dimensions of the electronic board **2,** and therefore by the ratio between first length and first width. Since the electronic circuit **3** is, as is known, a channel where electrical signals flow, i.e. information (the bits are electrical signals that make up the electronic circuit), in accordance with what is stated in the aforementioned article 'The Golden Ratio in Machine Learning', it is evident that imposing the ratio between these two dimensions according to the golden ratio leads to an improvement in the transmission of signals and therefore an improvement in the functionality of the electronic circuit **3** thus implemented.

Moreover, as stated several times before, the concept that a harmonious human body has certain parts of the body in a golden ratio with each other has been established throughout history. It follows that, in order to improve the functional capacity of an electronic device and ensure that it simulates as much as possible the operation of a human being, it is evident that an important aspect is to give the 'body' of the device, that is, at least to the electronic boards that compose it, measurements that represent ideal dimensions for a human body.

Previously it has been said that the electronic circuit **3** includes, like all known electronic circuits, several electronic components **4** arranged on the electronic board **2.** According to another aspect of the invention, among these electronic components **4** there are also integrated circuits **5.** In this case, according to a further aspect of the invention, said integrated circuits **5** have a second length and a second width whose ratio also corresponds to the golden ratio.

Advantageously, similarly to what has been said about the electronic board **2,** this feature enables the improvement of the functional capacity of the electronic device **1** of the invention and ensures that it simulates as much as possible the operation of a human being. In fact, the integrated circuits 5 will also have a 'body' having measurements that represent ideal dimensions for a human body.

Furthermore, since the two dimensions of the integrated circuits **5** determine at least the lengths of the electrical connections between the microchip and the pins of the integrated circuit **5,** once again, in accordance with the aforementioned research entitled 'The Golden Ratio in Machine Learning', the efficiency of the transmission of the signals of each individual integrated circuit **5** is improved.

As typically occurs, also in the case of the invention the electronic device **1** comprises a container **8** suitable for accommodating at least the electronic board **2.** This container, of course, has three dimensions. However, according to another aspect of the invention, two of the three dimensions have measurements whose ratio corresponds to the golden ratio. It follows that the above for electronic board **2** and integrated circuits **5** also applies to the container **8.** Moreover, this size affects the length of the electrical connection cables, thus once again satisfying the research 'The Golden Ratio in Machine Learning'.

According to the embodiment that is described, the golden ratio refers to the ratio between length and width of the container **8,** but this aspect should not be considered limiting for different embodiments of the invention where, for example, the golden ratio also concerns the ratio between width and height or where the golden ratio concerns any of the combinations of ratios between the three dimensions.

According to a further aspect of the invention, since the electronic circuit **3** comprises, as mentioned, a plurality of electronic components **4,** for at least three of them the ratio between the distances between a first and a second and between the second and a third of these three electronic components **4** corresponds to the golden ratio.

It is evident that this aspect once again satisfies the studies summarised in the aforementioned article 'The Golden Ratio in Machine Learning', thereby improving the entropy of the information exchanged between these electronic components **4.**

Moreover, since it has always been thought that the electrical connection between electronic circuits is similar to the nerve network of a human body, ensuring that the electrical connections are in golden ratio to each other optimises the arrangement of the electronic components **4** and therefore the operation of the electronic circuit **3** of the device **1** of the invention.

As a result of the above, it is evident that the electronic device of the invention achieves all its intended purposes.

In particular, the computational capabilities of the electronic device of the invention are improved since in its execution the dimensions of boards, integrated circuits, container and distances between components refer as much as possible to the golden ratio so as to bring them closer to simulating a human being.

It follows, moreover, that the electronic device of the invention is structurally optimised so as to improve the exchange of electrical signals between the electronic components that compose it.

The invention is subject to numerous modifications and variations, all falling within the appended claims. Moreover, all the details may furthermore be replaced by other technically equivalent elements, and the materials may be different if required, without departing from the scope of protection of the invention defined by the appended claims.

## Claims

1. Electronic device comprising at least one electronic board (**2**) having a first length and a first width and on which at least one electronic circuit (**3**) is made, **characterised in that** at least said first length and said first width have measurements whose ratio corresponds to the golden ratio.

2. Electronic device according to claim 1, **characterised in that** said at least one electronic circuit (**3**) comprises one or more integrated circuits (**5**), at least one of said integrated circuits (**5**) having a second length and a second width whose ratio corresponds to the golden ratio.

3. Electronic device according to claim 1 or 2, **characterised in that** it comprises at least one container (**8**) at least for said at least one electronic board (**2**), said container (**8**) having at least two of the three dimensions whose ratio corresponds to the golden ratio.

4. Electronic device according to claim 2 or 3, **characterised in that** said electronic circuit (**3**) comprises at least three electronic components (**4**), the ratio between the distances between a first and a second of said at least three electronic components (**4**) and between said second and a third of said at least three electronic components (**4**) corresponding to the golden ratio.

5. Electronic device according to one or more of the preceding claims, **characterised in that** it is a personal computer.

6. Electronic device according to one or more of claims 1 to 4, **characterised in that** it is a mobile communication device.
